# EUROPEAN PATENT APPLICATION

(11) **EP 3 499 058 A1**
(43) Date of publication of application: **19.06.2019**
(21) Application number: 17839789.9
(22) Date of filing: 09.08.2017
(51) Int. Cl.: F16B 47/00

(54) **SUCTION APPARATUS**

(30) Priority: 09.08.2016 KR 20160101059
(71) Applicant: Jang, Jin Tae, Gangseo-gu, Seoul 07667 (KR)
(72) Inventor: Jang, Jin Tae, Gangseo-gu, Seoul 07667 (KR)
(74) Representative: Casalonga
(86) International application number: PCT/KR2017/008586
(87) International publication number: WO 2018/030771

(57) **Abstract**

A suction apparatus according to the present invention includes a suction plate, a fixing shaft, a supporting plate, an adhesive member, and a housing. The suction plate is configured to adhere to a suction subject surface. The fixing shaft is configured to be fixed to a central portion of the suction plate, and is configured to upwardly transport the central portion of the suction plate to be separated from the suction subject surface to form a sealed space between the suction plate and the suction subject surface in a pressure lower than an atmosphere pressure. The supporting plate has a ring shape and prepared on a periphery of the suction plate, and is combined with the suction plate. The adhesive member has a ring shape, and includes an upper surface fixed to a lower surface of the supporting plate and a lower surface configured to adhere to the suction subject surface, to prevent inflow of an air toward the sealed space. The housing has a hole through the fixing shaft passes, and is disposed on the supporting plate. Thus, the suction apparatus may easily fix the adhesive member to the supporting plate.

## Description

### Technical Field

The present invention relates to a suction apparatus, and more particularly, to a suction apparatus configured to fix various objects to a suction subject surface such as a dashboard of an automobile, a tile, a desk, glass, etc., by a vacuum force.

### Background art

Generally, a suction apparatus fixes an object to a suction subject surface using a suction plate by a vacuum force. A suction plate of a conventional suction apparatus, as time goes on, loses a vacuum state to gradually lose suction force since an air inflows thereinto. Also, when the suction apparatus is not attached to a smooth surface but is attached to an uneven surface such as a dashboard of an automobile, an air inflows through a space formed by the uneven surface, and thus, the suction force is greatly decreased compared with a smooth surface.

In order to solve the above-described problem, Korean Patent No. 10-0852164 discloses a technology of coating silicon or urethane gel having a flexible adhesiveness along a periphery of a lower surface of the suction plate to prevent inflow of the air thereinto, thereby increasing the suction force. However, since the surface of the suction plate has a smooth inert surface having a low surface energy and has elasticity, the urethane gel is not easily attached to the suction plate.

In order to solve the above-described problem, Korean Patent No. 10-0891964 discloses a technology of filling an urethane adhesive material into a molding box, which is coated by Teflon, attaching the urethane adhesive material to a suction plate pretreated by a primer, etc., and thermosetting and molding in a hot dry chamber. However, the above-described technology includes highly complex processes, and thus, productivity is low and manufacturing cost is high. Also, when the urethane adhesive material attached under the suction plate is damaged by repetitive attachments and detachments, contacts with external objects, etc., or is polluted by dusts, oil, etc., the adhesiveness of the urethane adhesive material is greatly decreased, and thus, the adhesiveness of the suction plate is decreased. Also, since the urethane adhesive material is permanently attached to the suction plate by the thermosetting process, the entire suction apparatus should be replaced.

### Detailed description of the invention

### Technical problem

The purpose of the present invention is to provide a suction apparatus using an adhesive material to prevent decrease of suction force of a suction plate, and the adhesive material being easily replaceable in case of damage or pollution of the adhesive material.

### Technical solution

In order to achieve the above-mentioned purpose of the present invention, a suction apparatus includes a suction plate, a fixing shaft, a supporting plate, an adhesive member, and a housing. The suction plate is configured to adhere to a suction subject surface. The fixing shaft is configured to be fixed to a central portion of the suction plate, and is configured to upwardly transport the central portion of the suction plate to be separated from the suction subject surface to form a sealed space between the suction plate and the suction subject surface in a pressure lower than an atmosphere pressure. The supporting plate has a ring shape and prepared on a periphery of the suction plate, and is combined with the suction plate. The adhesive member has a ring shape, and includes an upper surface fixed to a lower surface of the supporting plate and a lower surface configured to adhere to the suction subject surface, to prevent inflow of an air toward the sealed space. The housing has a hole through the fixing shaft passes, and is disposed on the supporting plate.

According to one embodiment of the present invention, the combined portion between the suction plate and the supporting plate may have an uneven structure configured to increase a contact area.

According to one embodiment of the present invention, a periphery of the suction plate may have an uneven structure in an outer direction, and an inner surface periphery of the supporting plate has an uneven structure in an inner direction, and the uneven structure of the periphery of the suction plate may be interlocked with the uneven structure of the inner surface periphery of the supporting plate.

According to one embodiment of the present invention, a periphery of the suction plate and an inner surface periphery of the supporting plate may be overlapped and combined with each other, and the periphery of the suction plate and the inner surface periphery of the supporting plate may have an interlocking uneven structure.

According to one embodiment of the present invention, a thickness of the periphery of the suction plate may be smaller than a thickness of a remaining portion of the suction plate, and a thickness of the inner surface periphery of the supporting plate may be smaller than a thickness of a remaining portion of the supporting plate.

According to one embodiment of the present invention, a lower surface of the suction plate may have the same height as the lower surface of the adhesive member.

According to one embodiment of the present invention, the supporting plate may have a receiving recess disposed along a periphery of the lower surface thereof, and may be configured to receive the adhesive member.

According to one embodiment of the present invention, the suction plate may include an elastic and flexible material, and the supporting plate may include a solid material.

According to one embodiment of the present invention, the adhesive member may be fixed to the lower surface of the supporting plate.

According to one embodiment of the present invention, the suction apparatus may further include a lifting member connected to the fixing shaft on the housing, and configured to lift the fixing shaft with respect to the housing.

According to one embodiment of the present invention, a screw thread may be formed on a surface of the fixing shaft, and the lifting member may include a nut being screw combined with the fixing shaft and configured to lift the fixing shaft with respect to the housing by rotation.

According to one embodiment of the present invention, the lifting member may include a pressing block and a lever. The pressing block may be prepared with the fixing shaft through an axis in rotatable combination, and may be configured to press an upper surface of the housing or to release the pressure. The lever may be fixed to the pressing block, and may be configured to rotate the pressing block with respect to the axis to lift the fixing shaft with respect to the housing.

According to one embodiment of the present invention, a recess may be formed on a lower surface of the housing to prepare a space, in which the suction plate is upwardly lifted.

### Advantageous effects

According to the above-mentioned suction apparatus, a supporting plate of a solid material having a high surface energy is combined with a suction plate. Since a combined portion between the supporting plate and the suction plate has an uneven structure, an area, at which the supporting plate contacts the suction plate, is increased, and thus, the supporting plate may be securely combined with the suction plate.

Also, in the suction apparatus, an adhesive member is not fixed to the suction plate of a smooth elastic material having a low surface energy but is fixed to the supporting plate of the solid material having the high surface energy. Thus, the adhesive member may be securely fixed to the supporting plate.

In addition, in the suction apparatus, the adhesive member is fixed to a lower surface of the supporting plate using an adhesive film. When a surface of the adhesive member is damaged by repetitive attachments and detachments or by contacts with external objects, etc., the adhesive member may be easily replaced using the adhesive film. Since the adhesive member may only be selectively replaced, cost for replacing the adhesive member may be minimized.

### Brief description of the drawings

FIG. 1 is a side cross-sectional view illustrating a suction apparatus according to one embodiment of the present invention.
FIG. 2 is a cross-sectional view illustrating the suction apparatus of FIG. 1 attached to a target board by a vacuum force.
FIG. 3 is an enlarged cross-sectional view illustrating a combination between a suction plate and a supporting plate of FIG. 1.
FIG. 4 is a plan view illustrating another exemplary combination between a suction plate and a supporting plate of FIG. 1.
FIGS. 5 and 6 are cross-sectional views illustrating a lifting member shown in FIG. 1.

### Best Mode of the invention

A suction apparatus according to the present invention includes a suction plate, a fixing shaft, a supporting plate, an adhesive member, and a housing. The suction plate is configured to adhere to a suction subject surface. The fixing shaft is configured to be fixed to a central portion of the suction plate, and is configured to upwardly transport the central portion of the suction plate to be separated from the suction subject surface to form a sealed space between the suction plate and the suction subject surface in a pressure lower than an atmosphere pressure. The supporting plate has a ring shape and prepared on a periphery of the suction plate, and is combined with the suction plate. The adhesive member has a ring shape, and includes an upper surface fixed to a lower surface of the supporting plate and a lower surface configured to adhere to the suction subject surface, to prevent inflow of an air toward the sealed space. The housing has a hole through the fixing shaft passes, and is disposed on the supporting plate.

### Modes of the invention

Hereinafter, a suction apparatus according to embodiments of the present invention will be explained in detail with reference to enclosed drawings. It is important to understand that the present invention may be embodied in many alternate forms and should not be construed as limited to the example embodiments set forth herein. While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. In explaining each drawing, like numerals are used for lime elements. In the enclosed drawings, the sizes and relative sizes of layers and regions may be exaggerated for clarity. Like numerals refer to like elements throughout.

It will be understood that, although the terms first, second, etc. may be used herein to describe various elements, these elements should not be limited by these terms. These terms are used to distinguish one element from another. For example, a first element discussed below could be termed a second element without departing from the teachings of the present inventive concept. Also, a second element discussed below could be termed a first element without departing from the teachings of the present inventive concept.

The terms used in the present invention is only used to explain particular embodiments, and it is not intended to limit the present invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

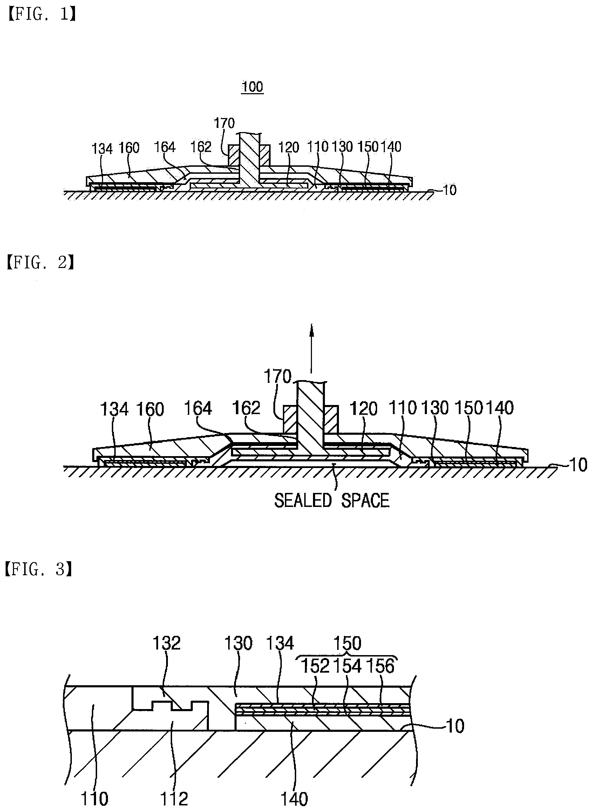

FIG. 1 is a side cross-sectional view illustrating a suction apparatus according to one embodiment of the present invention, and FIG. 2 is a cross-sectional view illustrating the suction apparatus of FIG. 1 attached to a target board by a vacuum force, and FIG. 3 is an enlarged cross-sectional view illustrating a combination between a suction plate and a supporting plate of FIG. 1.

Referring to FIGS. 1 to 3, the suction device 100 fixes an object (not shown) to a suction subject surface 10 by a suction force. Examples of the objects may include a mobile device such as a cellular phone, etc., a navigation system, etc., and examples of the suction subject surface 10 may include a dashboard of an automobile, a tile, a desk, glass, etc.

The suction apparatus 100 may include a suction plate 110, a fixing shaft 120, a supporting plate 130, an adhesive member 140, an adhesive film 150, a housing 160, and a lifting member 170.

The suction plate 110 has a disk-like shape, and is attached to the suction target board 10. The suction plate 110 may include a material having elasticity and flexibility. For example, the suction plate 110 may include rubber, urethane, elastomer, etc.

The fixing shaft 120 is fixed to a central portion of the suction plate 110. For example, the fixing shaft 120 may be fixed to the suction plate 110 through an insert injection, through which the suction plate 110 including the fixing shaft 120 is injected. In another exemplary embodiment, the fixing shaft 120 may be fixed to the suction plate 110 through a bonding process or a thermal welding process.

Since the fixing shaft 120 is fixed to the central portion of the suction plate 110, the fixing shaft 120 is upwardly transported and the central portion of the suction plate 110 may be separated from the suction subject surface 10. Thus, a sealed space having a pressure lower than an atmosphere pressure may be formed between the suction plate 110 and the suction subject surface 10. Therefore, the suction plate 110 may be sucked to the suction subject surface 10 by the pressure difference between the pressure of the sealed space and the atmosphere pressure.

The supporting plate 130 has a ring-like shape, and is prepared along a periphery of the suction plate 110 to be combined with the suction plate 110. The supporting plate 130 includes a solid material having a high surface energy. For example, the supporting plate 130 may include a plastic resin or a metallic material.

Since the supporting plate 130 has the high surface energy, the supporting plate 130 may be securely combined with the suction plate 110. For example, the supporting plate 130 and the suction plate 110 may be combined through a double injection process, a bonding process, or a thermal welding process.

In particular, the supporting plate 130 and the suction plate 110 may be partially overlapped, and the supporting plate 130 may be combined with the suction plate 110. For example, an inner surface periphery 132 of the supporting plate 130 may be disposed as an upper portion, and a periphery 112 of the suction plate 110 may be disposed as a lower portion, and thus, the supporting plate 130 may be partially overlapped with the suction plate 110. In another exemplary embodiment, for example, the inner surface periphery 132 of the supporting plate 130 may be disposed as a lower portion, and the periphery 112 of the suction plate 110 may be disposed as an upper portion, and thus, the supporting plate 130 may be partially overlapped with the suction plate 110.

Here, a thickness of the inner surface periphery 132 of the supporting plate 130 may be smaller than a thickness of a remaining portion of the supporting plate 130, and a thickness of the periphery 112 of the suction plate 110 may be smaller than a thickness of a remaining portion of the suction plate 110. Thus, a thickness of the overlapped portion between the inner surface periphery 132 of the supporting plate 130 and the periphery 112 of the suction plate 110 may be similar or equal to the thickness of the remaining portion of the supporting plate 130 or the thickness of the remaining portion of the suction plate 110. Thus, the overlapped thickness between the supporting plate 130 and the suction plate 110 may not be increased, and the thickness of the suction apparatus 100 may be minimized.

The combined portion between the supporting plate 130 and the suction plate 110 may have an uneven structure. In particular, overlapping surfaces of the inner surface periphery 132 of the supporting plate 130 and the periphery 112 of the suction plate 110 may interlock with each other to form the uneven structure. Thus, an area at which the inner surface periphery 132 of the supporting plate 130 contacts with the periphery 112 of the suction plate 110 is increased, and thus, the supporting plate 130 may be more securely combined with the suction plate 110.

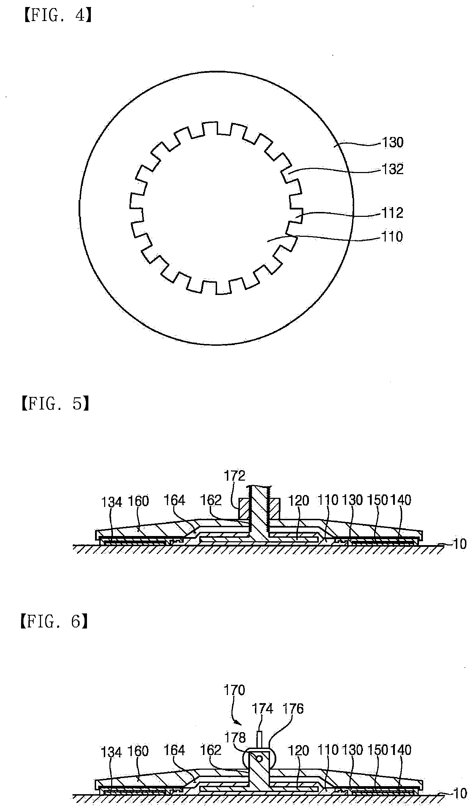

FIG. 4 is a plan view illustrating another exemplary combination between a suction plate and a supporting plate of FIG. 1.

Referring to FIG. 4, an uneven structure, at which a periphery 112 of a suction plate 110 interlocks along a periphery of an inner surface periphery 132 of the supporting plate 130.

In particular, the periphery 112 of the suction plate 110 has an uneven structure along a periphery thereof in an outer direction, and the inner surface periphery 132 of the supporting plate 130 has an uneven structure along a periphery thereof in an inner direction. The uneven structure of the periphery 112 of the suction plate 110 may interlock with the uneven structure of the inner surface periphery 132 of the supporting plate 130.

Therefore, an area, at which the inner surface periphery 132 of the supporting plate 130 contacts with the periphery 112 of the suction plate 110, is increased, and thus, the supporting plate 130 may be more securely combined with the suction plate 110.

Meanwhile, although not shown in the drawings, in order to increase the contact area between the supporting plate 130 and the suction plate 110, the combined portion between the supporting plate 130 and the suction plate 110 may have various uneven shapes.

Referring again to FIGS. 1 to 3, the supporting plate 130 may have a receiving recess 134 along a periphery of the lower surface thereof. For example, the receiving recess 134 may be formed along a center of the lower surface of the support plate 130.

The adhesive member 140 has a ring shape, and is inserted into the receiving recess 134 of the supporting plate 130. An upper surface of the adhesive member 140 is fixed to a lower surface of the supporting plate 130, in particular, an upper surface of the receiving recess 134, and a lower surface of the adhesive member 140 is fixed to the suction subject surface 10. The adhesive member 140 may include silicon or urethane gel, and may have a sheet shape.

The adhesive member 140 adheres to the suction subject surface 10 to prevent inflow of an external air towards the sealed space of the suction plate 110. Thus, the adhesive member 140 may maintain the vacuum force of the suction plate 110 in a long time.

Meanwhile, the adhesive member 140 is not fixed to the suction plate 110 including the smooth elastic material having the low surface energy but is fixed to the supporting plate 130 including the solid material having the high surface energy. Thus, the adhesive member 140 may be easily fixed to the supporting plate 130, and the adhesive member 140 may securely maintain the fixed state to the supporting plate 130.

Also, the lower surface of the adhesive member 140 may have the same height as the lower surface of the suction plate 110. Thus, the suction plate 110 and the adhesive member 140 may be simultaneously and uniformly contacted with the suction subject surface 10. Therefore, the suction plate 110 and the adhesive member 140 may not be contacted in time interval or in non-uniformity, and thus, air may be prevented from remaining between the suction plate 110 and the suction subject surface 10 or between the adhesive member 140 and the suction subject surface 10.

Meanwhile, the lower surface of the supporting plate 130 may have the same height as the lower surface of the adhesive member 140 and the lower surface of the suction plate 110. Thus, the suction plate 110, the supporting plate 130, and the adhesive member 140 may be simultaneously and uniformly contacted with the suction subject surface 10.

The adhesive film 150 is disposed between the adhesive member 140 and the supporting plate 130, and fixes the adhesive member 140 to the lower surface of the supporting plate 130.

In particular, the adhesive film 150 includes a base film 152, a first adhesive 154 coated on a lower surface of the base film 152, and a second adhesive 156 coated on an upper surface of the base film 152.

The first adhesive 154 is attached to the adhesive member 140, and includes an adhesive material having a high surface energy. Examples of the first adhesive 154 may include polyethylene terephthalate (PET), etc. Since the first adhesive 154 has the high surface energy, the first adhesive 154 may securely fix the adhesive member 140.

The second adhesive 156 is attached to the supporting plate 130, and may include an adhesive material, which is easily detachable and attachable. Examples of the second adhesive 156 may include a silicon adhesive, an acrylic based adhesive, etc. Since the supporting plate 130 has the high surface energy, the second adhesive 156 may be securely fixed to the supporting plate 130. Also, when the surface of the adhesive member 140 is damaged by repetitively attachments and detachments, or contacts with external objects, etc., the second adhesive 156 of the adhesive film 150 may be easily detached from the supporting plate 130. Thus, the adhesive member 140 may be easily replaced.

Also, although the adhesive member 140 is damaged, the suction apparatus 100 may not be entirely replaced but only the adhesive member 140 may be selectively replaced, and thus, maintenance cost of the suction apparatus 100 may be minimized.

The housing 160 is prepared to cover the suction plate 110 and the supporting plate 130. The housing 160 has a hole 162, through which the fixing shaft 162 passes. The housing 160 has a recess 164 on a center of a lower surface thereof. The recess 164 prepares a space in which the suction plate 100 is transported in the upper direction. Thus, a size of the recess 164 is similar or equal to a size of the suction plate 110.

The housing 160 makes contact with the upper surface of the supporting plate 130 through the recess 164 formed on the lower surface of the housing 160. When the lifting member 170 upwardly lifts the fixing shaft 120, the housing 160 presses the supporting plate 130 by a force of the lifting member 170 pressing the housing 160. Since the supporting plate 130 is pressed, the adhesive member 140 may securely maintain a sealed state between the adhesive member 140 and the suction subject surface 10. Therefore, inflow of the external air toward the sealed space of the suction plate 110 may be securely prevented.

The lifting member 170 is connected to the fixing shaft 120 in an upper portion of the housing 160, and lifts the fixing shaft 120 with respect to the housing 160. When the lifting member 170 presses the upper surface of the housing 160 and upwardly lifting the fixing shaft 120, the central portion of the suction plate 110 is separated from the suction subject surface 10 to form the sealed space between the suction plate 110 and the suction subject surface 10.

While the suction plate 110 adheres to the suction subject surface 10, the lifting member 170 upwardly lifts the fixing axis 120 with respect to the housing 160, and thus, the suction plate 110 sucks the suction subject surface 10 by the vacuum force. Here, a repulsive force, which is formed by the force of the lifting member 170 upwardly lifting the fixing shaft 120, is applied to the housing 160, and thus, the lifting member 170 presses the housing 160. The housing 160 presses the supporting plate 130 by the force of the lifting member 170 pressing the housing 160, and the supporting plate 130 presses the adhesive member 140, and thus, the adhesive member 140 may be more securely adhered to the suction subject surface 10.

While the suction plate 110 sucks the suction subject surface 10 by the vacuum force, the lifting member 170 downwardly lifts the fixing shaft 120 with respect to the housing 160, and thus, the vacuum force of the suction plate 110 may be released.

The lifting member 170 may have various structures.

FIGS. 5 and 6 are cross-sectional views illustrating a lifting member shown in FIG. 1.

Referring to FIG. 5, a screw thread may be formed on a surface of the fixing shaft 120, and the lifting member 170 may be a nut 174 combined with the fixing shaft 120. As the nut 174 rotates, the fixing shaft 120 may be lifted with respect to the housing 160.

In particular, the nut 174 rotates the combined nut 174 in one direction and contacts the housing 160, and then, the nut 174 additionally rotates in the one direction, and thus, the fixing shaft 120 is upwardly lifted with respect to the housing 160 by the rotational force of the nut 174. Also, when the nut 174 rotates in an opposite direction opposite to the one direction, the fixing shaft 120 is downwardly lifted with respect to the housing 160 by the rotational force of the nut 174.

Referring to FIG. 6, the lifting member 170 may include a lever 174 and a pressing block 176, and the lever 174 may rotates with respect to an axis 178 prepared in the fixing shaft 120, and thus, the fixing shaft 120 may be lifted.

In particular, the pressing block 176 is rotatable with the fixing shaft 120 through the axis 178, and presses the upper surface of the housing 160 or releases the pressure. The lever 174 is fixed to the pressing block 176, and rotates the pressing block 176 with respect to the axis 178. When the lever 174 rotates in the one direction with respect to the axis 178, the pressing block 176 presses the upper surface of the housing 160, and the fixing shaft 120 connected to the pressing block 176 through the axis 178 is upwardly lifted with respect to the housing 160. Also, when the lever 174 rotates in the opposite direction opposite to the one direction with respect to the axis 178, the pressing block 176 releases the pressure applied to the upper surface of the housing 160, and the fixing shaft 120 connected to the pressing block 176 through the axis 178 is downwardly lifted with respect to the housing 160.

As described above, the fixing axis 120 may be securely lifted using the lifting member 170.

Meanwhile, although not shown in the drawings, the suction apparatus 100 may include a fixing member configured to fix the subject.

### Industrial Applicability

According to the suction apparatus of the present invention, the supporting plate is securely combined with the suction plate, and the adhesive member is not fixed to the suction plate having the smooth and elastic material having the lower surface energy but is fixed to the supporting plate of the solid material having the high surface energy. Thus, the supporting plate may be securely combined with the suction plate.

Also, in the suction apparatus, since the adhesive member is fixed to the lower surface of the supporting plate using the adhesive film, the adhesive member may be selectively replaced. Thus, the cost for replacing the adhesive member may be minimized.

In addition, since the supporting plate and the suction plate may be combined with each other through the double injection, the bonding, and the thermal welding processes, and the adhesive member may be fixed to the supporting plate using the adhesive film, the manufacturing cost of the suction apparatus may be decreased, and productivity of the processes for manufacturing the suction apparatus may be improved.

The present invention has been particularly shown and described with reference to the embodiments illustrated in the appended drawings. The embodiments are, however, provided as examples only used for a better understanding of the present invention. It would be obvious to those of ordinary skill in the art that the above embodiments are to cover all modifications, equivalents, and alternatives falling within the scope of the invention. Accordingly, it will be understood that various changes in form and details may be made therein without departing from the spirit and scope of the following claims.

## Claims

1. A suction apparatus comprising:
a suction plate configured to adhere to a suction subject surface;
a fixing shaft configured to be fixed to a central portion of the suction plate, and configured to upwardly transport the central portion of the suction plate to be separated from the suction subject surface to form a sealed space between the suction plate and the suction subject surface in a pressure lower than an atmosphere pressure;
a supporting plate having a ring shape and prepared on a periphery of the suction plate, and being combined with the suction plate;
an adhesive member having a ring shape, and including an upper surface fixed to a lower surface of the supporting plate and a lower surface configured to adhere to the suction subject surface, to prevent inflow of an air toward the sealed space; and
a housing having a hole through the fixing shaft passes, and being disposed on the supporting plate.

2. The suction apparatus of claim 1, wherein the combined portion between the suction plate and the supporting plate has an uneven structure configured to increase a contact area.

3. The suction apparatus of claim 2, wherein a periphery of the suction plate has an uneven structure in an outer direction, and an inner surface periphery of the supporting plate has an uneven structure in an inner direction, and the uneven structure of the periphery of the suction plate is interlocked with the uneven structure of the inner surface periphery of the supporting plate.

4. The suction apparatus of claim 1, wherein a periphery of the suction plate and an inner surface periphery of the supporting plate are overlapped and combined with each other, and the periphery of the suction plate and the inner surface periphery of the supporting plate have an interlocking uneven structure.

5. The suction apparatus of claim 4, wherein a thickness of the periphery of the suction plate is smaller than a thickness of a remaining portion of the suction plate, and a thickness of the inner surface periphery of the supporting plate is smaller than a thickness of a remaining portion of the supporting plate.

6. The suction apparatus of claim 1, wherein a lower surface of the suction plate has the same height as the lower surface of the adhesive member.

7. The suction apparatus of claim 1, wherein the supporting plate has a receiving recess disposed along a periphery of the lower surface thereof, and is configured to receive the adhesive member.

8. The suction apparatus of claim 1, wherein the suction plate comprises an elastic and flexible material, and the supporting plate comprises a solid material.

9. The suction apparatus of claim 1, wherein the adhesive member is fixed to the lower surface of the supporting plate.

10. The suction apparatus of claim 1, further comprising a lifting member connected to the fixing shaft on the housing, and configured to lift the fixing shaft with respect to the housing.

11. The suction apparatus of claim 10, wherein a screw thread is formed on a surface of the fixing shaft, and the lifting member comprises a nut being screw combined with the fixing shaft and configured to lift the fixing shaft with respect to the housing by rotation.

12. The suction apparatus of claim 10, wherein the lifting member comprises:
a pressing block prepared with the fixing shaft through an axis in rotatable combination, and being configured to press an upper surface of the housing or to release the pressure; and
a lever fixed to the pressing block, and being configured to rotate the pressing block with respect to the axis to lift the fixing shaft with respect to the housing.

13. The suction apparatus of claim 1, wherein a recess is formed on a lower surface of the housing to prepare a space, in which the suction plate is upwardly lifted.
